# EUROPEAN PATENT APPLICATION

(11) **EP 4 401 209 A1**
(43) Date of publication of application: **17.07.2024**
(21) Application number: 22941177.2
(22) Date of filing: 13.05.2022
(51) Int. Cl.: H01M 50/117, H01M 50/122, H01M 50/124

(54) **BATTERY CELL, BATTERY UNIT, BATTERY, AND ELECTRIC DEVICE**

(71) Applicant: Contemporary Amperex Technology Co., Limited, Ningde, Fujian 352100 (CN)
(72) Inventor: TANG, Huaichao, Ningde, Fujian 352100 (CN); PENG, Longqing, Ningde, Fujian 352100 (CN); LI, Ting, Ningde, Fujian 352100 (CN); CHEN, Qianjun, Ningde, Fujian 352100 (CN)
(74) Representative: Ziebig Hengelhaupt Intellectual Property Attorneys Patentanwaltskanzlei PartGmbB
(86) International application number: PCT/CN2022/092642
(87) International publication number: WO 2023/216223

(57) **Abstract**

A cell core, a battery cell, a battery, and an electric device are provided. The cell core includes a cell core body, where the cell core body includes at least one electrode assembly, the cell core body has two opposite end faces and a cell core side face connected between the two end faces, and tabs of any one of the electrode assemblies are led out from at least one end face of the two end faces; where the cell core further includes a cell core protection layer, the cell core protection layer covers at least a part of a side face of the cell core body, and the cell core protection layer includes an inorganic coating layer or an organic-inorganic composite structure coating layer. Such cell core helps reduce a risk of short circuit between the cell core and a housing. The battery cell includes the cell core, a battery includes the battery cell, and the electric device includes the battery.

## Description

### TECHNICAL FIELD

This disclosure relates to the field of battery technologies, and in particular, to a cell core, a battery cell, a battery, and an electric device.

### BACKGROUND

Batteries, particularly lithium-ion secondary batteries, are widely used in electric devices such as electric bicycles, electric vehicles, electric toys, and electric tools.

In the related art, to prevent a separator in a battery cell from being pierced by particles, a layer of Mylar (Mylar) membrane is typically wrapped around an electrode assembly of a cell core before the cell core is put into a housing, strengthening insulation. However, the Mylar (Mylar) membrane increases the thickness of the cell core, reducing energy density. In addition, the Mylar (Mylar) membrane has poor adhesion and is prone to aging, causing an insulation failure and safety hazards.

### SUMMARY

This disclosure provides a cell core, a battery cell, a battery, and an electric device, intended to improve the energy density and safety performance of battery cells.

A first aspect of this disclosure provides a cell core, including a cell core body. The cell core body includes at least one electrode assembly, the cell core body has two opposite end faces and a cell core side face connected between the two end faces, and tabs of any one of the electrode assemblies are led out from at least one end face of the two end faces. The cell core further includes a cell core protection layer, the cell core protection layer covers at least a part of a side face of the cell core body, and the cell core protection layer includes an inorganic coating layer or an organic-inorganic composite structure coating layer.

Because the cell core protection layer of the cell core body includes the inorganic coating layer or organic-inorganic composite structure coating layer, and the inorganic coating layer or organic-inorganic composite structure coating layer forms a uniform, dense, strong, and thin film, it is conducive to preventing particles inside a housing of the battery cell from piercing a separator of the electrode assembly of the cell core. This helps avoid a failure of the cell core due to short circuit caused by overlapping of electrode plates of the electrode assembly or overlapping between an electrode plate and a housing of the battery cell. In this way, safety performance can be improved.

The provision of the cell core protection layer having an inorganic coating layer or organic-inorganic composite structure coating layer spares the Mylar membrane as used in the related art, thereby reducing overall thickness of the electrode assembly and the cell core, and in turn increasing energy density.

The cell core protection layer having an inorganic coating layer or organic-inorganic composite structure coating layer can prevent particles inside the housing from piercing the separator of the electrode assembly. Compared to the related art, this can increase mechanical strength of an outer separator, preventing safety hazards caused by outer layer damage, and also reduce overall thickness of the electrode assembly and the cell core, and in turn increase energy density.

In the cell core in some embodiments, the cell core side face includes a first side face and a second side face that are opposite each other, and a third side face and a fourth side face that are opposite each other. The third side face and the fourth side face are respectively connected to the first side face and the second side face, and the first side face and the second side face have a larger area than the third side face and the fourth side face. The cell core protection layer includes a first protection layer and a second protection layer. The first protection layer is disposed on the first side face, and the second protection layer is disposed on the second side face.

The first side face and the second side face of the cell core body are largest cell core sides of the cell core body. The largest cell core sides are closer to an inner wall of a housing body 221 of a housing 22 of a battery cell 20 and have potentially a large physical contact area with the inner wall of the housing body 221. Therefore, there is a higher risk of short circuit between an electrode plate corresponding to the largest cell core side and the housing body 221 than between an electrode plate corresponding to other parts of the cell core side face and the housing body 221. The first protection layer and the second protection layer are respectively disposed on the first side face and the second side face of the cell core body, which helps effectively protect the cell core body, reducing a risk of particles inside the housing piercing the separator.

In the cell core in some embodiments, the cell core protection layer further includes a third protection layer and a fourth protection layer. The third protection layer is disposed on the third side face, and the fourth protection layer is disposed on the fourth side face.

The third protection layer and the fourth protection layer are respectively disposed on the third side face and the fourth side face of the cell core body, so that more effective and comprehensive protection can be provided for the cell core body, thereby helping further reduce the risk of particles inside the housing piercing the separator.

In the cell core in some embodiments, the first protection layer and the second protection layer have a small thickness than the third protection layer and the fourth protection layer; of the first protection layer and the second protection layer have a larger thickness than the third protection layer and the fourth protection layer; or the first protection layer, the second protection layer, the third protection layer, and the fourth protection layer have an equal thickness.

With the first protection layer and the second protection layer having a smaller thickness than the third protection layer and the fourth protection layer, when the cell core body is placed in the housing body of the housing to form the cell core protection layer, it helps the cell core protection layer perfectly fill gaps between the first protection layer and the housing body and between the second protection layer and the housing body, thereby improving protection effect of the largest cell core sides.

The cell core swells over use, and a swelling force mainly acts between the largest cell core sides and the housing. The first protection layer and the second protection layer having a larger thickness than the third protection layer and the fourth protection layer relatively strengthens protection of the largest cell core sides, helping prevent an insulation failure of the cell core protection layer caused by the swelling force of the cell core.

With the first protection layer, the second protection layer, the third protection layer, and the fourth protection layer having an equal thickness, when the cell core protection layer is formed, for example, when the cell core protection layer is formed by vapor deposition, the cell core protection layer can cover the whole cell core side face, thereby improving manufacturing efficiency of the cell core.

In the cell core in some embodiments, the inorganic material coating layer or organic-inorganic composite structure coating layer are directly attached to the cell core body.

In the related art in which a mylar membrane is disposed outside the cell core body, the mylar membrane fits around the outside of the cell core body, but does come into firm contact with the electrode assembly, so the mylar membrane is likely to move relative to the electrode assembly. Thus, there is a risk of failure of insulation protection. With the inorganic material coating layer or organic-inorganic composite structure coating layer directly attached to the cell core body, the coating layer has a stable position relative to the cell core body, which is conducive to ensuring protection performance.

In the cell core in some embodiments, the inorganic material coating layer or organic-inorganic composite structure coating layer of the cell core protection layer is integrally formed by vapor deposition, spraying, or sputtering.

The inorganic coating layer or organic-inorganic composite structure coating layer being integrally formed by vapor deposition, spraying, or sputtering facilitates a coating layer that is uniform and dense, has strong integrity, and is firmly bonded with the surface of the cell core body. A nano-scale or micro-scale inorganic coating layer or organic-inorganic composite structure coating layer can be formed by vapor deposition, which helps forming a more uniform, denser, stronger, and thinner film, effectively preventing particles from piercing the separator.

In the cell core in some embodiments, thickness of the inorganic material coating layer or organic-inorganic composite structure coating layer ranges from 0.01 µm to 1000 µm. In the cell core n some embodiments, the thickness of the inorganic material coating layer or organic-inorganic composite structure coating layer ranges from 0.05 µm to 5 µm.

The thickness of the inorganic material coating layer or organic-inorganic composite structure coating layer being properly set can not only provide effective protection the cell core body, but also avoid material waste and unnecessary processing time, saving production costs and improving production efficiency.

A second aspect of this disclosure provides a battery cell, including the cell core according to the first aspect of this disclosure and a housing. The housing includes a housing body, the cell core is located in an accommodating space of the housing body, and the cell core protection layer of the cell core is opposite an inner wall of the housing body.

The cell core protection layer being disposed between the cell core body and the inner wall of the housing body helps separate the cell core body from the housing body, preventing short circuit between an electrode plate of the cell core body and the housing body, and improving safety of the cell core and a battery in which the cell core is located.

In the battery cell in some embodiments, the cell core protection layer of the cell core is fixedly connected to the inner wall of the housing body. Alternatively, the housing further includes a housing protection layer disposed on the inner wall of the housing body, and the housing protection layer and the cell core protection layer are opposite each other and spaced apart. The housing protection layer includes an inorganic material coating layer or an organic-inorganic composite structure coating layer.

When the cell core protection layer of the cell core is fixedly connected to the inner wall of the housing body, the cell core protection layer fills a gap between the cell core body and the housing body. The cell core body and the housing body are relatively fixed, helping prevent particles from entering the cell core body, preventing the particles from piercing the separator, and improving protection effect.

With the housing including a housing protection layer disposed on the inner wall of the housing body, the housing protection layer and the cell core protection layer being opposite each other and spaced apart, and the housing protection layer including an inorganic material coating layer or an organic-inorganic composite structure coating layer, insulation protection is facilitated between the housing body and the cell core body, effectively preventing short circuit between the housing body and an electrode plate of the cell core body.

In the battery cell in some embodiments, the inorganic material coating layer or organic-inorganic composite structure coating layer of the cell core protection layer is formed between the cell core body and the inner wall of the housing body by vapor deposition. Alternatively, the inorganic material coating layer or organic-inorganic composite structure coating layer of the cell core protection layer and the inorganic material coating layer or organic-inorganic composite structure coating layer of the housing protection layer are formed simultaneously between the cell core body and the inner wall of the housing body by vapor deposition.

With the inorganic material coating layer or organic-inorganic composite structure coating layer of the cell core protection layer formed between the cell core body and the inner wall of the housing body by vapor deposition, or the inorganic material coating layer or organic-inorganic composite structure coating layer of the cell core protection layer and the inorganic material coating layer or organic-inorganic composite structure coating layer of the housing protection layer simultaneously formed by vapor deposition, a nano-scale and micro-scale inorganic coating layer or organic-inorganic composite structure coating layer of the cell core protection layer and a nano-scale and micro-scale inorganic material coating layer or organic-inorganic composite structure coating layer of the housing protection layer can be formed, helping form a more uniform, denser, stronger, and thinner film, and effectively preventing particles from piercing the separator.

In the battery cell in some embodiments, the cell core protection layer fills a gap between a side face of the cell core body and the inner wall of the housing body.

With the cell core protection layer filling the gap between the side face of the cell core body and the inner wall of the housing body, particles are prevented from moving in the gap between the side face of the cell core body and the inner wall of the housing body, helping prevent the particles from piercing the separator.

A third aspect of this disclosure provides a battery, including the battery cell according to the second aspect of this disclosure. The battery in this disclosure has advantages of the battery cell in this disclosure.

A fourth aspect of this disclosure provides an electric device, including the battery according to the third aspect of this disclosure, where the battery is used to provide power to the electric device. The electric device in this disclosure has advantages of the battery in this disclosure.

### BRIEF DESCRIPTION OF DRAWINGS

To describe the technical solutions in the embodiments of this disclosure more clearly, the following briefly introduces the accompanying drawings required for describing the embodiments of this disclosure. Apparently, the accompanying drawings in the following description show merely some embodiments of this disclosure, and a person of ordinary skill in the art may still derive other drawings from the accompanying drawings without creative efforts.
FIG. 1 is a schematic diagram depicting a structure of a vehicle as an electric device according to an embodiment of this disclosure;
FIG. 2 is a schematic diagram depicting a structure of a battery according to an embodiment of this disclosure;
FIG. 3 is an exploded view depicting a structure of a battery cell in a battery according to an embodiment of this disclosure;
FIG. 4 is a cross-sectional view depicting a structure of a battery cell according to the embodiment shown in FIG. 3;
FIG. 5 is an exploded view depicting a structure of a battery cell in a battery according to an embodiment of this disclosure;
FIG. 6 is a cross-sectional view depicting a structure of a battery cell according to the embodiment shown in FIG. 5;
FIG. 7 is a cross-sectional view depicting a structure of a battery cell according to an embodiment of this disclosure;
FIG. 8 is a cross-sectional view depicting a structure of a battery cell according to an embodiment of this disclosure;
FIG. 9 is a cross-sectional view depicting a structure of a battery cell according to an embodiment of this disclosure;
FIG. 10 is a cross-sectional view depicting a structure of a battery cell according to an embodiment of this disclosure; and
FIG. 11 is a cross-sectional view depicting a structure of a battery cell according to an embodiment of this disclosure.

The accompanying drawings are not drawn to scale.

### DESCRIPTION OF EMBODIMENTS

The following further describes the embodiments of this disclosure in detail with reference to the accompanying drawings and implementations. The detailed description and accompanying drawings of the following embodiments are used to exemplarily illustrate the principle of this disclosure, but cannot be intended to limit the scope of this disclosure, that is, this disclosure is not limited to the described embodiments.

In the descriptions of this disclosure, it should be noted that, unless otherwise specified, "a plurality of" means more than two; orientations or positional relationships indicated by the terms "up", "down", "left", "right", "inside", "outside", and the like are merely intended for ease and brevity of the descriptions of this disclosure, without indicating or implying that a means or part needs to have a particular orientation or needs to be constructed and operated in a particular orientation. Therefore, these terms shall not be construed as limitations on this disclosure. In addition, the terms "first", "second", and "third" are merely intended for a purpose of description, and shall not be understood as an indication or implication of relative importance. "Vertical" is not vertical in the strict sense but within an allowable error range. "Parallel" is not parallel in the strict sense but within an allowable error range.

The orientation terms used in the following description all indicate directions shown in the figures, and do not limit specific structures in this disclosure. In the descriptions of this disclosure, it should also be noted that, unless otherwise specified and defined explicitly, the terms "mount", "connect", and "join" should be understood broadly. For example, they may refer to a fixed connection, a detachable connection, or an integral connection, and they may refer to a direct connection or an indirect connection through an intermediate object. A person of ordinary skill in the art can understand specific meanings of these terms in this disclosure as appropriate to specific situations.

A production process of battery cells involves many process steps, so there are some particles inside the battery cell. These particles are present because there are inevitably some small particles mixed with materials received. In addition, there are several welding steps during the production process, and welding spatter produced by welding has a certain probability of entering the battery cell. During use of the battery, the particles inside the battery cell can pierce a separator in the electrode assembly of the cell core, causing short circuit between electrode plates in the electrode assembly and between the electrode plate and a metal housing of the battery cell, for example, an aluminum housing. To prevent the particles in the battery cell from piercing the separator causing the housing to become electrically charged, a Mylar membrane is usually disposed outside the electrode assembly for further insulation protection.

There are three main problems regarding the Mylar membrane disposed outside the electrode assembly in the related art:

Due to limitation of the material, the Mylar membrane is relatively thick, occupying space and reducing energy density of the battery.

The Mylar membrane is usually fixed by adhering to a lower plastic; after being soaked in an electrolyte, the Mylar membrane can fall off, and as a result, the Mylar membrane is not able to cover the electrode assembly properly, so that the electrode assembly might come into contact with the housing of the battery cell, causing safety hazards.

The Mylar membrane ages, and when the Mylar membrane ages, they may rupture, resulting in an insulation failure at the position of rupture.

Given this, the inventors provide a cell core, a battery cell, a battery, and an electric device, with a protection layer covering at least a part of a side face of the cell core body so that the protection layer is firmly bonded with an outer surface of the cell core body, achieving the technical effect of improving energy density and safety of the battery cell.

An embodiment of this disclosure provides an electric device using a battery as a power source, and the battery is configured to provide electric energy to the electric device. The electric device may be, but is not limited to, a mobile phone, a portable device, a notebook computer, an electric bicycle, an electric car, a ship, a spacecraft, an electric toy, and an electric tool. For example, the spacecraft includes an airplane, a rocket, a space shuttle, a spaceship, and the like. The electric toy includes a fixed or mobile electric toy, for example, a game console, an electric car toy, an electric ship toy, an electric aircraft toy, and the like. The electric tool includes an electric metal cutting tool, an electric grinding tool, an electric assembly tool, and an electric railway-purpose tool, for example, an electric drill, an electric bench grinder, an electric wrench, an electric screwdriver, an electric hammer, an electric impact drill, a concrete blender, and an electric planer.

In this application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylindrical, flat, cuboid, or of other shapes, which is not limited in the embodiments of this application either. Battery cells are typically divided into three types by packaging method: cylindrical battery cell, prismatic battery cell, and pouch battery cell. The type of battery cell is not limited in the embodiments of this application either.

The battery mentioned in the embodiments of this application refers to a single physical module that includes one or more battery cells for providing a higher voltage and capacity. For example, the battery mentioned in this application may include a battery module, a battery pack, or the like. The battery generally includes a box used to package one or more battery cells. The box can prevent liquids or other foreign matters from affecting charging or discharging of the battery cell.

The battery cell mainly includes an electrode assembly and an electrolyte. The electrode assembly includes a positive electrode plate, a negative electrode plate, and a separator. Working of the battery cell mainly relies on migration of metal ions between the positive electrode plate and the negative electrode plate. The positive electrode plate includes a positive electrode current collector and a positive electrode active substance layer. The positive electrode active substance layer is applied on a surface of the positive electrode current collector. Apart of the positive electrode current collector uncoated with the positive electrode active substance layer protrudes from a part of the positive electrode current collector coated with the positive electrode active substance layer, and the part of positive electrode current collector uncoated with the positive electrode active substance layer acts as a positive tab. Using the lithium-ion battery as an example, a material of the positive electrode current collector may be aluminum, and the positive electrode active substance may be lithium cobalt oxide, lithium iron phosphate, ternary lithium, lithium manganate oxide, or the like. The negative electrode plate includes a negative electrode current collector and a negative electrode active substance layer. The negative electrode active substance layer is applied on a surface of the negative electrode current collector. A part of the negative electrode current collector uncoated with the negative electrode active substance layer protrudes from a part of the negative electrode current collector coated with the negative electrode active substance layer, and the part of negative electrode current collector uncoated with the negative electrode active substance layer acts a negative tab. A material of the negative electrode current collector may be copper, and the negative electrode active substance can be carbon, silicon, or the like. To allow large currents to pass without fusing, the positive tab is provided in plurality, and the plurality of positive tabs are stacked together; and the negative tab is provided in plurality, and the plurality of negative tabs are stacked together. A material of the separator may be PP (polypropylene, polypropylene), PE (polyethylene, polyethylene), or the like.

For ease of description, the electric device in some embodiments of this disclosure being a vehicle D is used as an example for description.

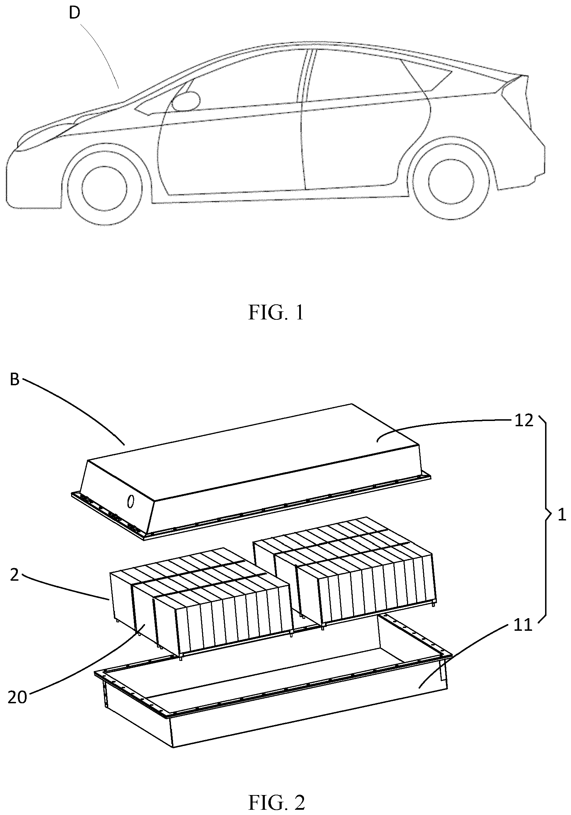

Refer to FIG. 1. FIG. 1 is a schematic diagram depicting a structure of a vehicle D provided in some embodiments of this disclosure. The vehicle D may be a fuel vehicle, a gas vehicle, or a new energy vehicle, and the new energy vehicle may be a battery electric vehicle, a hybrid electric vehicle, an extended range electric vehicle, or the like. The vehicle D is provided with a battery B inside, and the battery B may be disposed at the bottom, front, or back of the vehicle D. The battery B may be configured to supply power for the vehicle D, for example, configured as an operational power source for the vehicle D.

In some embodiments of this disclosure, the battery B may be used not only as the operational power source for the vehicle D but also as a driving power source for the vehicle D, completely or partially replacing fossil fuel or natural gas to provide driving power for the vehicle D.

Refer to FIG. 2, and FIG. 2 is an exploded view of a battery B provided in some embodiments of this disclosure.

The battery B includes a box 1 and a battery cell 20 accommodated in the box 1. The box 1 includes a box housing 11 and a box cover 12 covering the box housing 11. The box 1 is configured to provide an accommodating space for the battery cell 20. In the foregoing embodiments, the box 1 is a rectangular cuboid as a whole. In an embodiment not shown in the figures, the box 1 may alternatively be other shapes, such as a cylinder.

In the battery B, the battery cell 20 is provided in plurality, and the plurality of battery cells 20 may be connected in series, parallel, or series-parallel. Connection in series-parallel means that the plurality of battery cells 20 are connected both in series and parallel. The plurality of battery cells 20 may be directly connected in series, parallel, or series-parallel, and a whole constituted by the plurality of battery cells 20 is accommodated in the box 1.

As shown in FIG. 2, the battery B may be a battery group 2 composed of a plurality of battery cells 20 that are first connected in series, parallel, or series-parallel. The battery group 2 may take the form of a battery module. A plurality of battery groups 2 are then connected in series, parallel, or series-parallel to form a whole and accommodated in box 1. The battery B may alternatively be other structures, for example, the battery B may further include a bus component for implementing electrical connection between the plurality of battery cells 20.

The battery cell mainly includes a cell core, a housing, and an end cover assembly, and the cell core may include one, two, or more electrode assemblies. The cell core is encapsulated in an accommodating space of the housing via an end cover of the end cover assembly, and the accommodating space is filled with an electrolyte.

The electrode assemblies are disposed in the accommodating space of the housing. The electrode assembly is a component in the battery cell where electrochemical reactions take place. The electrode assembly may be a wound structure. A strip-shaped first electrode plate, separator, and second electrode plate are stacked in sequence and the stack is wound more than two turns to form an electrode assembly, and the electrode assembly may be flat in shape. In preparation of the electrode assembly, the electrode assembly may be directly wound into a flat shape, so that the electrode assembly is roughly a hexahedron structure, or the electrode assembly may be first wound into a hollow cylindrical structure, and then flattened into a flat shape after winding. A flat surface is roughly parallel to a winding axis and is an outer surface with the largest area. The flat surface may be a relatively flat surface and does not need to be a perfectly flat surface.

The electrode assembly may alternatively be a laminated structure, that is, the electrode assembly includes a plurality of first electrode plates and a plurality of second electrode plates, and separators are disposed between the first electrode plates and the second electrode plates. The first electrode plate and the second electrode plate are stacked.

The housing is a component used to provide an accommodating space to accommodate the electrode assembly, the electrolyte, and other components. The housing may have various shapes and sizes, such as cuboid, cylinder, and hexagonal prism. Specifically, the shape of the housing may be determined based on the specific shape and size of the electrode assembly. A material of the housing may be copper, iron, aluminum, stainless steel, aluminum alloy, plastic, or another material.

The end cover is a component that covers an opening of the housing for separating the internal environment of the battery cell from the external environment. The shape of the end cover can adapt to the shape of the housing to fit with the housing. Optionally, the end cover may be made of a material with a certain hardness and strength (such as aluminum alloy), so that the end cover is less likely to deform when subjected to compression and collision, enabling the battery cell to have higher structural strength and improving safety performance. Functional components such as electrode terminals can be disposed on the end cover. The electrode terminal may be used for electrical connection with the electrode assembly to output electric energy from to the battery cell or input electric energy to the battery cell. In some embodiments, the end cover may further be provided with a pressure relief mechanism for releasing internal pressure when the internal pressure or temperature of the battery cell reaches a threshold. The pressure relief mechanism, for example, an explosion-proof valve, is usually located on the end cover of the battery cell. The explosion-proof valve may be a part of a flat surface of the end cover or welded to the flat surface of the end cover. The end cover may be made of various materials, such as copper, iron, aluminum, stainless steel, an aluminum alloy, and plastic. This is not limited in the embodiments of this disclosure.

The housing and the end cover may be independent components, and the housing is provided with an opening. The end cover covers the opening to create the internal environment of the battery cell. Without limitation, the end cover and the housing may alternatively be integrated. Specifically, the end cover and the housing can form a common connection surface before other components are placed into the housing. When the interior of the housing needs to be closed, the end cover can cover the housing, and the housing and the end cover are packaged as a whole.

In the battery cell in some embodiments, an insulation member may further be provided on an inner side of the end cover, and the insulation member may be configured to separate electrical connection components inside the housing from the end cover to reduce a risk of short circuit. For example, the insulation member may be an insulation plate made of materials such as plastic or rubber.

The end cover and various components provided on the end cover, such as the electrode terminals, explosion-proof valve, insulation plate, form an end cover assembly.

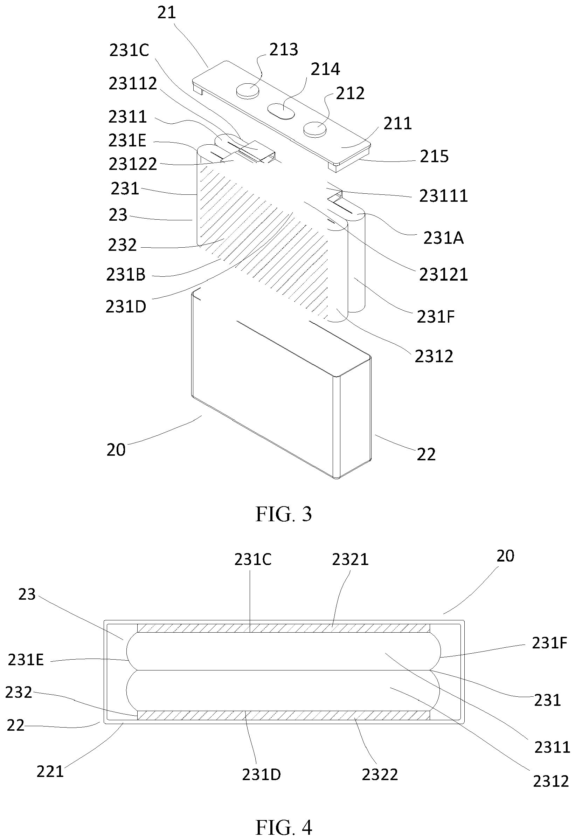

As shown in FIG. 3 to FIG. 11, an embodiment of this disclosure provides a cell core 23, including a cell core body 231. The cell core body 231 includes at least one electrode assembly and has two opposite end faces 231A and 231B, and a cell core side face connected between the two end faces 231A and 231B. Tabs of the electrode assembly are led out from at least one end face of the two end faces 231A and 231B. The cell core 23 further includes a cell core protection layer 232. The cell core protection layer 232 covers at least a part of a side face of the cell core body 231, and the cell core protection layer 232 includes an inorganic coating layer or an organic-inorganic composite structure coating layer.

Because the cell core protection layer 232 of the cell core body 231 includes the inorganic coating layer or organic-inorganic composite structure coating layer, and the inorganic coating layer or organic-inorganic composite structure coating layer forms a uniform, dense, strong, and thin film, it is conducive to preventing particles inside a housing 22 of the battery cell 20 from piercing a separator of the electrode assembly of the cell core 23. This helps avoid failure of the cell core due to short circuit caused by overlapping of electrode plates of the electrode assembly or overlapping between an electrode plate and a housing 22 of the battery cell 20. In this way, safety performance can be improved.

The provision of the cell core protection layer 232 having an inorganic coating layer or organic-inorganic composite structure coating layer spares the Mylar membrane as used in the related art, thereby reducing overall thickness of the electrode assembly and the cell core, and in turn increasing energy density.

The cell core protection layer having an inorganic coating layer or organic-inorganic composite structure coating layer can prevent particles inside the housing from piercing the separator of the electrode assembly. Compared to the related art, this can eliminate the application of ceramic particles or sedimentary inorganic substances on a surface of the separator, thereby reducing the overall thickness of the electrode assembly and the cell core, and in turn increasing energy density.

For example, the inorganic coating layer may include at least one of an aluminum oxide coating layer, a silicon oxide coating layer, a zirconia coating layer, a hafnium oxide coating layer, a titanium oxide coating layer, a magnesium oxide coating layer, a zinc oxide coating layer, a Boehmite coating layer, an aluminium hydroxide coating layer, a magnesium hydroxide coating layer, and a lithium fluoride coating layer.

The organic-inorganic composite structure coating layer may be formed by hybridization of organic-inorganic materials, or may be laminated. When the organic-inorganic composite structure coating layer is laminated, it may be a combination of one organic coating layer and one inorganic coating layer, a combination of one organic coating layer and a plurality of inorganic coating layers, a combination of a plurality of organic coating layers and one inorganic coating layer, or a combination of a plurality of organic coating layers and a plurality of inorganic coating layers. When the organic-inorganic composite structure coating layer includes a plurality of organic coating layers, the organic coating layer may be made of the same or different materials. When the organic-inorganic composite structure coating layer includes a plurality of inorganic coating layers, the inorganic coating layers may be made of the same or different materials.

As shown in FIG. 3 to FIG. 11, in the cell core 23 in some embodiments, the cell core side face includes a first side face 231C and a second side face 231D that are opposite each other, and a third side face 231E and a fourth side face 231F that are opposite each other. The third side face 231E and the fourth side face 231F are respectively connected to the first side face 231C and the second side face 231D, and the first side face 231C and the second side face 231D have a larger area than the third side face 231E and the fourth side face 231F. The cell core protection layer 232 includes a first protection layer 2321 and a second protection layer 2322. The first protection layer 2321 is disposed on the first side face 231C, and the second protection layer 2322 is disposed on the second side face 231D.

The first side face 231C and the second side face 231D of the cell core body 231 are largest cell core sides of the cell core body 231. The largest cell core side is closer to an inner wall of a housing body 221 of a housing 22 of a battery cell 20 and have potentially a large physical contact area with the inner wall of the housing body 221. Therefore, there is a higher risk of short circuit between an electrode plate corresponding to the largest cell core side and the housing body 221 than between an electrode plate corresponding to other parts of the cell core side face and the housing body 221. The first protection layer 2321 and the second protection layer 2322 are respectively disposed on the first side face 231C and the second side face 231D of the cell core body 231, which helps effectively protect the cell core body 231, reducing a risk of particles inside the housing 22 piercing the separator.

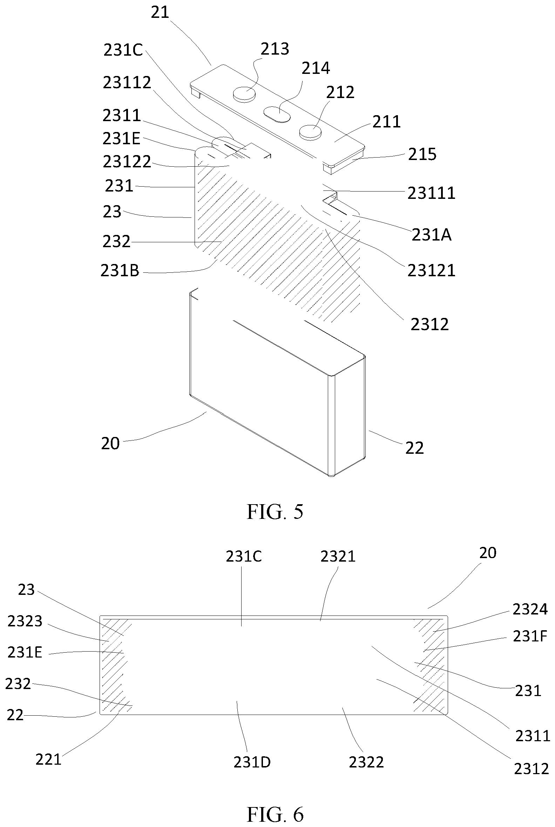

As shown in FIG. 5, FIG. 6, and FIG. 9 to FIG. 11, in the cell core 23 in some embodiments, the cell core protection layer 232 further includes a third protection layer 2323 and a fourth protection layer 2324. The third protection layer 2323 is disposed on the third side face 231E, and the fourth protection layer 2324 is disposed on the fourth side face 231F.

In the related art, there are gaps between the Mylar membrane outside the cell core body and the housing body, especially between the Mylar membrane and electrode assemblies when there are a plurality of electrode assemblies. Particles, metal wires, and the like in these gaps may pierce the separator, causing a risk of short circuit. The third protection layer 2323 and the fourth protection layer 2324 are respectively disposed on the third side face 231E and the fourth side face 231F of the cell core body 231, so that more effective and comprehensive protection can be provided for the cell core body 231, thereby helping further reduce the risk of particles inside the housing 22 piercing the separator.

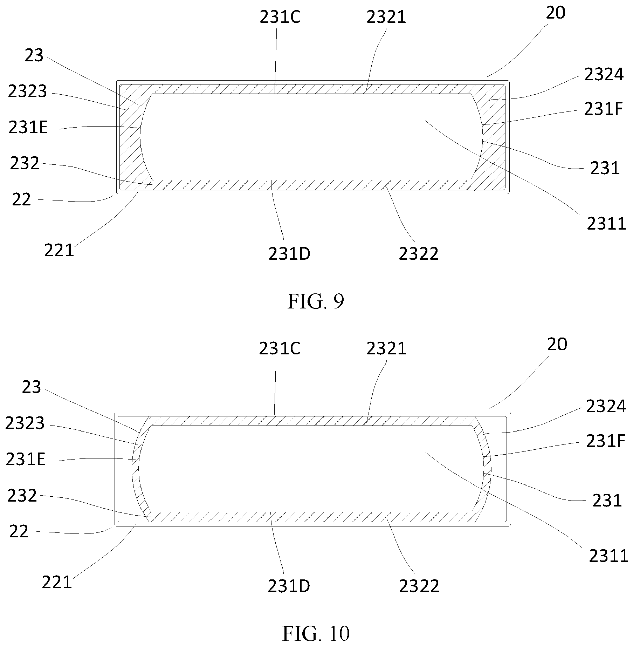

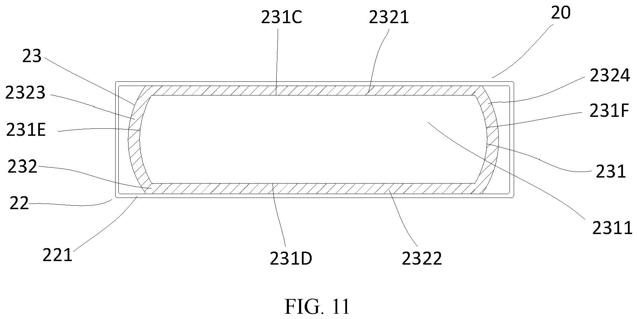

In the cell core 23 in some embodiments, as shown in FIG. 6 and FIG. 9, the first protection layer 2321 and the second protection layer 2322 have a larger thickness than the third protection layer 2323 and the fourth protection layer 2324; or as shown in FIG. 10, the first protection layer 2321 and the second protection layer 2322 have a larger thickness than the third protection layer 2323 and the fourth protection layer 2324; or as shown in FIG. 11, the first protection layer 2321, the second protection layer 2322, the third protection layer 2323, and the fourth protection layer 2324 have an equal thickness.

With the first protection layer 2321 and the second protection layer 2322 having a larger thickness than the third protection layer 2323 and the fourth protection layer 2324, when the cell core body 231 is placed in the housing body 221 of the housing 22 to form the cell core protection layer 232, it helps the cell core protection layer 232 perfectly fill gaps between the first protection layer 2321 and the housing body 221 and between the second protection layer 2322 and the housing body 221, thereby improving protection effect of the largest cell core sides.

The cell core 23 swells over use, and a swelling force mainly acts between the largest cell core sides and the housing 22. The thicknesses of the first protection layer 2321 and the second protection layer 2322 are greater than that of the third protection layer 2323 and the fourth protection layer 2324, which relatively strengthens protection of the largest cell core sides, helping prevent an insulation failure of the cell core protection layer caused by the swelling force of the cell core.

The thicknesses of the first protection layer 2321, the second protection layer 2322, the third protection layer 2323, and the fourth protection layer 2324 are equal, so that when the cell core protection layer 232 is formed, for example, the cell core protection layer 232 is formed by vapor deposition, the cell core protection layer 232 covers the whole cell core side face, thereby improving manufacturing efficiency of the cell core 23.

In the cell core 23 in some embodiments, the inorganic material coating layer or organic-inorganic composite structure coating layer are directly attached to the cell core body 231.

In the related art in which a mylar membrane is disposed outside the cell core body, the mylar membrane fits around the outside of the cell core body 231, but does come into firm contact with the electrode assembly, so the mylar membrane is likely to move relative to the electrode assembly. Thus, there is a risk of failure of insulation protection. With the inorganic material coating layer or organic-inorganic composite structure coating layer directly attached to the cell core body 231, the coating layer has a stable position relative to the cell core body 231, which is conducive to ensuring protection performance.

In the cell core 23 in some embodiments, the inorganic coating layer or organic-inorganic composite structure coating layer is integrally formed by vapor deposition, spraying, or sputtering.

The inorganic coating layer or organic-inorganic composite structure coating layer being integrally formed by vapor deposition, spraying, or sputtering facilitates a coating layer that is uniform and dense and has strong integrity and therefore has high strength. A nano-scale or micro-scale inorganic coating layer or organic-inorganic composite structure coating layer can be formed by vapor deposition, which helps forming a more uniform, denser, stronger, and thinner layer, effectively preventing particles from piercing the separator.

In the cell core 23 in some embodiments, thickness of the inorganic coating layer or organic-inorganic composite structure coating layer ranges from 0.01 µm to 1000 µm.

In the cell core 23 in some embodiments, the thickness of the inorganic coating layer or organic-inorganic composite structure coating layer ranges from 0.05 µm to 5 µm.

The thickness of the inorganic coating layer or organic-inorganic composite structure coating layer being properly set can not only provide effective protection for the cell core body 231, but also avoid material waste and unnecessary processing time, saving production costs and improving production efficiency.

As shown in FIG. 3 to FIG. 11, an embodiment of this disclosure further provides a battery, including the cell core 23 and the housing 22 according to the embodiments of this disclosure. The housing 22 includes a housing body 221. The cell core 23 is located in an accommodating space of the housing body 221, and the cell core protection layer 232 of the cell core 23 is opposite an inner wall of the housing body 221.

The cell core protection layer 232 being disposed between the cell core body 231 and the inner wall of the housing body 221 helps separate the cell core body 231 from the housing body 221, preventing short circuit between an electrode plate of the cell core body 231 and the housing body 221, and improving safety of the cell and a battery in which the cell core 232 is located.

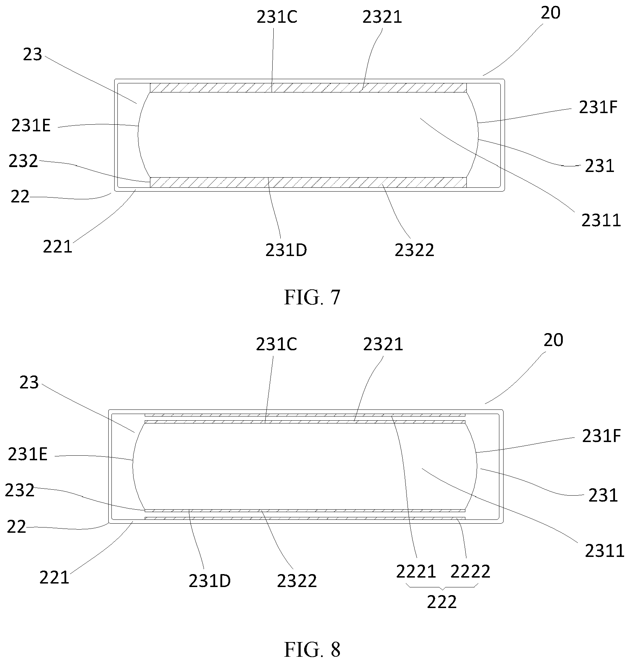

As shown in FIG. 4, FIG. 6, FIG. 7, and FIG 9 to FIG. 11, in the battery in some embodiments, the cell core protection layer 232 of the cell core 23 is fixedly connected to the inner wall of the housing body 221. As shown in FIG. 8, in the cell core 23 in some embodiments, the housing 22 further includes a housing protection layer 222 disposed on the inner wall of the housing body 221, the housing protection layer 222 and the cell core protection layer 232 are opposite each other and spaced apart, and the housing protection layer 222 includes an inorganic material coating layer or an organic-inorganic composite structure coating layer.

When the cell core protection layer 232 of the cell core 23 is fixedly connected to the inner wall of the housing body 221, the cell core protection layer 232 fills a gap between the cell core body 231 and the housing body 221. The cell core body 231 and the housing body 221 is relatively fixed, helping prevent particles from entering the cell core body 231, preventing the particles from piercing the separator, and improving protection effect. With the housing 22 further including a housing protection layer 222 disposed on the inner wall of the housing body 221, the housing protection layer 222 and the cell core protection layer 232 being opposite each other and spaced apart, and the housing protection layer 222 including an inorganic material coating layer or an organic-inorganic composite structure coating layer, insulation protection is facilitated between the housing body 221 and the cell core body 231, effectively preventing short circuit between the housing body 221 and an electrode plate of the cell core body 231.

In the battery in some embodiments, the inorganic coating layer or organic-inorganic composite structure coating layer of the cell core protection layer 232 is formed between the cell core body 231 and the inner wall of the housing body 221 by vapor deposition. Alternatively, the inorganic material coating layer or organic-inorganic composite structure coating layer of the cell core protection layer 232 and the inorganic material coating layer or organic-inorganic composite structure coating layer of the housing protection layer 222 are formed simultaneously between the cell core body 231 and the inner wall of the housing body 221 by vapor deposition.

With the inorganic coating layer or organic-inorganic composite structure coating layer of the cell core protection layer 232 formed between the cell core body 231 and the inner wall of the housing body 221 by vapor deposition, or the inorganic material coating layer or organic-inorganic composite structure coating layer of the cell core protection layer 232 and the inorganic material coating layer or organic-inorganic composite structure coating layer of the housing protection layer 222 simultaneously formed by vapor deposition, a nano-scale and micro-scale inorganic material coating layer or organic-inorganic composite structure coating layer and a nano-scale and micro-scale inorganic material coating layer or organic-inorganic composite structure coating layer of the housing protection layer 222 can be formed, helping form a more uniform, denser, stronger, and thinner film, effectively preventing particles from piercing the separator.

In the battery cell in some embodiments, as shown in FIG. 6 and FIG. 9, the cell core protection layer 232 fills a gap between a side face of the cell core body 231 and the inner wall of the housing body 221.

With the cell core protection layer 232 filling the gap between the side face of the cell core body 231 and the inner wall of the housing body 221, particles are prevented from moving in the gap between the side face of the cell core body 231 and the inner wall of the housing body 221, helping prevent the particles from piercing the separator.

An embodiment of this disclosure further provides an electric device, including the battery according to the embodiments of this disclosure, where the battery is used to provide power to the electric device. The electric device in this disclosure has advantages of the battery in this disclosure.

The following describes a structure of the cell core 23 and the battery cell 20 in which the cell core 23 is located in some embodiments of this disclosure with reference to FIG. 3 to FIG. 11. The battery according to an embodiment of this disclosure includes the battery cell 20 according to the embodiments of this disclosure.

As shown in FIG. 3, the battery cell 20 includes an end cover assembly 21, a housing 22, and a cell core 23.

The end cover assembly 21 includes an end cover 211, a first electrode terminal 212, a second electrode terminal 213, an explosion-proof valve 214, and an insulation plate 215. The end cover 211 is configured to fit with the housing 22 to encapsulate a first electrode assembly 2311 and a second electrode assembly 2312 in a closed accommodating space created by the end cover 211 and the housing 22. The first electrode terminal 212 is a positive electrode terminal, and the second electrode terminal 213 is a negative electrode terminal. The positive electrode terminal and the negative electrode terminal may be electrically connected to corresponding tabs of the electrode assemblies respectively through a connecting piece (not shown in the figure). The insulation plate 215 is disposed between the end cover 211 and the connecting piece to implement insulation between the end cover 211 and the electrode assemblies.

The cell core 23 includes a cell core body 231 and a cell core protection layer 232. The cell core body 231 includes two electrode assemblies, namely, the first electrode assembly 2311 and the second electrode assembly 2312. A positive tab 23111 of the first electrode assembly 2311 and a positive tab 23121 of the second electrode assembly 2312 are electrically connected to the first electrode terminal 212 on the end cover 211 of the end cover assembly 21. A negative tab 23112 of the first electrode assembly 2311 and a negative tab 23122 of the second electrode assembly 2312 are connected to the second electrode terminal 213 on the end cover 211 of the end cover assembly 21.

As shown in FIG. 3 and FIG. 4, the cell core body 231 of the cell core 23 has two opposite end faces 231A and 231B, and a cell core side face connected between the two end faces 231A and 231B. Tabs 23111, 23112, 23121, and 23122 of the two electrode assemblies 2311 and 2312 are led out from the end face 231A (the upper end face in FIG. 3). The cell core side face includes a first side face 231C and a second side face 231D that are opposite each other, and a third side face 231E and a fourth side face 231F that are opposite each other. The third side face 231E and the fourth side face 231F are respectively connected to the first side face 231C and the second side face 231D. The first side face 231C and the second side face 231D have a larger area than the third side face 231E and the fourth side face 231F, that is, the first side face 231C and the second side face 231D are largest cell core sides of the cell core body 231.

As shown in FIG. 3 and FIG. 4, the cell core protection layer 232 is disposed on a side face of the cell core body 231, and the cell core protection layer 232 includes an inorganic coating layer or an organic-inorganic composite structure coating layer.

The housing 22 includes a housing body 221. The cell core (23) is located in an accommodating space of the housing body (221), and the cell core protection layer 232 of the cell core 23 is opposite an inner wall of the housing body 221.

As shown in FIG. 3 and FIG. 4, the cell core protection layer 232 includes a first protection layer 2321 and a second protection layer 2322. The first protection layer 2321 is disposed on the first side face 231C, and the second protection layer 2322 is disposed on the second side face 231D.

As shown in FIG. 4, the cell core protection layer 232 of the cell core 23 is fixedly connected to the inner wall of the housing body 221. A side of the first protection layer 2321 away from the cell core body 231 and a side of the second protection layer 2322 away from the cell core body 231 are both fixedly connected to the inner wall of the housing body 221.

In the cell core 23, the cell core protection layer 232 only includes an inorganic coating layer. The inorganic coating layer includes an aluminum oxide coating layer. The inorganic coating layer is formed by vapor deposition.

The first electrode assembly 2311 and the second electrode assembly 2312 of the cell core body 231 in this embodiment are both wound electrode assemblies. One largest side of the first electrode assembly 2311 fits with one largest side of the second electrode assembly 2312. The other largest side of the first electrode assembly 2311 is the first side face 231C of the cell core body 231, and the other largest side of the second electrode assembly 2312 is the second side face 231D of the cell core body 231. The housing body 221 is an aluminum housing, and the cell core protection layer 232 of the cell core 23 is formed between the first side face 231C and second side face 231D of the cell core body 231 and an inner wall of the aluminum housing. The cell core protection layer 232 includes an insulating and high-strength first protection layer 2321 and second protection layer 2322 with an thickness equal to the gap. The first protection layer 2321 and the second protection layer 2322 prevent particles near the first side face 231C and the second side face 231D from piercing separators of the first electrode assembly 2311 and the second electrode assembly 2312, thereby improving use safety of the cell core 23. The cell core 23 does not need to be provided with a Mylar membrane, and the separators of the first electrode assembly 2311 and the second electrode assembly 2312 do not need to be coated with ceramic particles or sedimentary inorganic substances.

As shown in FIG. 5 and FIG. 6, different from the embodiments shown in FIG. 3 and FIG. 4, the cell core protection layer 232 further includes a third protection layer 2323 and a fourth protection layer 2324. The third protection layer 2323 is disposed on the third side face 231E, and the fourth protection layer 2324 is disposed on the fourth side face 231F.

Refer to previous relevant descriptions for the parts not described in the embodiments shown in FIG. 5 and FIG. 6.

As shown in FIG. 7, different from the embodiments shown in FIG. 3 and FIG. 4, the cell core body 231 includes only one electrode assembly 231.

Refer to previous relevant descriptions for the parts not described in the embodiment shown in FIG. 7.

As shown in FIG. 8, different from the embodiments shown in FIG. 3 and FIG. 4, the housing 22 further includes a housing protection layer 222 disposed on the inner wall of the housing body 221. The housing protection layer 222 and the cell core protection layer 232 are opposite each other and spaced apart. The housing protection layer 222 includes an inorganic protection layer. The inorganic coating layer of the cell core protection layer 232 and the inorganic protection layer of the housing protection layer 222 are simultaneously formed between the cell core body 231 and the inner wall of the housing body 221 by vapor deposition. The housing protection layer 222 includes a first housing protection layer portion 2221 opposite the first protection layer 2321 and a second housing protection layer portion 2222 opposite the second protection layer 2322.

Refer to previous relevant descriptions for the parts not described in the embodiment shown in FIG. 8.

As shown in FIG. 9, different from the embodiments shown in FIG. 5 and FIG. 6, the cell core body 231 includes only one electrode assembly 231.

Refer to previous relevant descriptions for the parts not described in the embodiment shown in FIG. 9.

As shown in FIG. 10, different from the embodiment in FIG. 9, the first protection layer 2321 and the second protection layer 2322 have a smaller thickness than the third protection layer 2323 and the fourth protection layer 2324.

Refer to previous relevant descriptions for the parts not described in the embodiment shown in FIG. 10.

As shown in FIG. 11, different from the embodiment in FIG. 10, the first protection layer 2321 and the second protection layer 2322 have an equal thickness as the third protection layer 2323 and the fourth protection layer 2324.

Refer to previous relevant descriptions for the parts not described in the embodiment shown in FIG. 11. In the cell core and the battery cell in the foregoing embodiments, although only the aluminum oxide coating layer is used as an example to describe a situation in which the cell core protection layer 232 and the housing protection layer 222 include only an inorganic coating layer, as described above, the aluminum oxide coating layer of the foregoing embodiments may be replaced with an inorganic coating layer of another material. For the inorganic coating layer alone, the inorganic coating layer may alternatively include an inorganic coating layer formed by different inorganic materials. The aluminum oxide coating layer in the foregoing embodiments may alternatively be replaced with an organic-inorganic composite structure coating layer that conforms with the previous description.

The cell core protection layer 232 and the housing protection layer 222 (if any) of the cell core 23 in the embodiments of this disclosure may be formed by vapor deposition.

In an embodiment of this disclosure, a cavity structure of the housing body 221 of the battery cell with no electrolyte injected may be directly utilized, with reactants introduced in sequence into the housing body 221 accommodating the cell core body 231 through an injection hole, ultimately generating the cell core protection layer 232 and a housing protection layer 222 (if any) with a certain thickness.

The cell core, the battery, and the electric device in the embodiments of this disclosure have at least one of the following advantages:

The cell core protection layer is located on a side face of the cell core body, filling the gap between the inner wall of the cell core body and the housing body, and includes a uniform, dense, and high-strength inorganic coating layer or organic-inorganic composite structure coating layer, which helps prevent the particles in the housing from piercing the separator of the electrode assembly causing overlapping between electrode plates and between an electrode plate and the inner wall of the aluminum housing, thus avoiding internal short circuit causing a failure of the cell core.

This can spare the Mylar membrane as used in the related art, simplifying the structure of the cell core.

The cell core protection layer and the housing protection layer (if any) formed by vapor deposition are uniform and dense, exhibiting good insulation and high-strength protection effect, allowing for a high preparation speed with high efficiency. Large-scale production can thus be implemented, with the thickness of each protection layer and the type of protection substance being controllable, and production of the protection layer substance does not affect performance of the cell core.

Although this disclosure has been described with reference to the preferred embodiments, various modifications can be made to this disclosure without departing from the scope of this disclosure and the components therein can be replaced with equivalents. In particular, various technical features mentioned in the embodiments can be combined in any manner provided that there is no structural conflict. This disclosure is not limited to the specific embodiments disclosed in this specification, but includes all technical solutions falling within the scope of the claims.

## Claims

1. A cell core (23), comprising a cell core body (231), wherein the cell core body (231) comprises at least one electrode assembly (2311, 2312), the cell core body (231) has two opposite end faces (231A, 231B) and a cell core side face connected between the two end faces (231A, 231B), and tabs (23111, 23112, 23121, 23122) of any one of the electrode assembly (2311, 2312) are led out from at least one end face (231A) of the two end faces (231A, 231B); wherein the cell core (23) further comprises a cell core protection layer (232), the cell core protection layer (232) covers at least a part of a side face of the cell core body (231), and the cell core protection layer (232) comprises an inorganic coating layer or an organic-inorganic composite structure coating layer.

2. The cell core (23) according to claim 1, wherein the cell core side face comprises a first side face (231C) and a second side face (231D) that are opposite each other, and a third side face (231E) and a fourth side face (231F) that are opposite each other, the third side face (231E) and the fourth side face (231F) are respectively connected to the first side face (231C) and the second side face (231D), the first side face (231C) and the second side face (231D) have a larger area than the third side face (231E) and the fourth side face (231F), and the cell core protection layer (232) comprises:
a first protection layer (2321) disposed on the first side face (231C); and
a second protection layer (2322) disposed on the second side face (231D).

3. The cell core (23) according to claim 2, wherein the cell core protection layer (232) further comprises:
a third protection layer (2323) disposed on the third side face (231E); and
a fourth protection layer (2324) disposed on the fourth side face (231F).

4. The cell core (23) according to claim 3, wherein
the first protection layer (2321) and the second protection layer (2322) have a smaller thickness than the third protection layer (2323) and the fourth protection layer (2324); or
the first protection layer (2321) and the second protection layer (2322) have a larger thickness than the third protection layer (2323) and the fourth protection layer (2324); or
the first protection layer (2321), the second protection layer (2322), the third protection layer (2323), and the fourth protection layer (2324) have an equal thickness.

5. The cell core (23) according to any one of claims 1 to 4, wherein the inorganic material coating layer or organic-inorganic composite structure coating layer are directly attached to the cell core body (231).

6. The cell core (23) according to any one of claims 1 to 5, wherein the inorganic material coating layer or organic-inorganic composite structure coating layer is integrally formed by vapor deposition, spraying, or sputtering.

7. The cell core (23) according to any one of claims 1 to 6, wherein thickness of the inorganic material coating layer or the organic-inorganic composite structure coating layer ranges from 0.01 µm to 1000 µm.

8. The cell core (23) according to claim 7, wherein the thickness of the inorganic material coating layer or organic-inorganic composite structure coating layer ranges from 0.05 µm to 5 µm.

9. A battery cell, comprising:
the cell core (23) according to any one of claims 1 to 8; and
a housing (22) comprising a housing body (221), wherein the cell core (23) is located in an accommodating space of the housing body (221), and the cell core protection layer (232) of the cell core (23) is opposite an inner wall of the housing body (221).

10. The battery cell according to claim 9, wherein
the cell core protection layer (232) of the cell core (23) is fixedly connected to the inner wall of the housing body (221); or
the housing (22) further comprises a housing protection layer (222) disposed on the inner wall of the housing body (221), the housing protection layer (222) and the cell core protection layer (232) are opposite each other and spaced apart, and the housing protection layer (222) comprises an inorganic material coating layer or an organic-inorganic composite structure coating layer.

11. The battery cell according to claim 10, wherein
an inorganic coating layer or organic-inorganic composite structure coating layer of the cell core protection layer (232) is formed between the cell core body (231) and the inner wall of the housing body (221) by vapor deposition; or
the inorganic material coating layer or organic-inorganic composite structure coating layer of the cell core protection layer (232) and the inorganic material coating layer or organic-inorganic composite structure coating layer of the housing protection layer (222) are simultaneously formed between the cell core body (231) and the inner wall of the housing body (221) by vapor deposition.

12. The battery cell according to any one of claims 9 to 11, wherein the cell core protection layer (232) fills a gap between a side face of the cell core body (231) and the inner wall of the housing body (221).

13. A battery, comprising the battery cell according to any one of claims 1 to 12.

14. An electric device, comprising the battery according to claim 13, wherein the battery is used to provide power to the electric device.
